Europäisches Patentamt

European Patent Office

Office européen des brevets

(11) Veröffentlichungsnummer: **0 384 274**

**A2**

(12) **EUROPÄISCHE PATENTANMELDUNG**

(21) Anmeldenummer: **90102846.4**

(22) Anmeldetag: **14.02.90**

(51) Int. Cl.⁵: **G06K 19/18, B42D 15/02**

(30) Priorität: **20.02.89 CH 614/89**

(43) Veröffentlichungstag der Anmeldung:
**29.08.90 Patentblatt 90/35**

(84) Benannte Vertragsstaaten:
**AT BE CH DE DK ES FR GB GR IT LI LU NL SE**

(71) Anmelder: **Orell Füssli Graphische Betriebe AG**
**Dietzingerstrasse 3**
**CH-8003 Zürich(CH)**

(72) Erfinder: **Coleman, John**
**Mühlibachstrasse 43**
**CH-8617 Mönchaltorf(CH)**
Erfinder: **Stucki, Peter**
**Hehlstrasse 47**
**CH-8135 Langnau(CH)**

(74) Vertreter: **Blum, Rudolf Emil Ernst et al**
**c/o E. Blum & Co Patentanwälte Vorderberg 11**
**CH-8044 Zürich(CH)**

(54) **Verfahren zur Herstellung einer mehrschichtigen Ausweiskarte.**

㊼ Die Karte wird aus mehreren Folienschichten (2 bis 8) gebildet, welche mittels verschiedener Drucktechnologien bedruckt werden. Die lichtdurchlässigen Folien (4,5) werden mittels eines digitalen Druckverfahrens mit vorgängig digital gespeicherten karteninhaberspezifischen Informationen bedruckt. Die Deckfolien (2,6), die Basisfolie (8) sowie weitere Folien werden sowohl digital als auch mittels herkömmlicher Druckverfahren bedruckt. Die Karte weist ferner in der Kartenebene transparente Bereiche (24) auf, welche vom Rand der Karte her optisch abtastbar sind und optische Strukturdaten bilden, die für jede Karte charakteristisch sind.

EP 0 384 274 A2

*Fig. 1*

## Verfahren zur Herstellung einer mehrschichtigen Ausweiskarte

Die Erfindung betrifft ein Verfahren zur Herstellung einer mehrschichtigen Ausweiskarte. Ferner betrifft die Erfindung eine Vorrichtung zu dessen Durchführung sowie eine nach dem Verfahren hergestellte Ausweiskarte.

Mehrschichtige Ausweiskarten sind bekannt, wobei unter dem Begriff Ausweiskarte sämtliche Kartenarten, wie Kennkarten, Kreditkarten, Scheckkarten, Mitgliederausweise, Pässe, Zertifikate, Geldersatz sowie andere Urkunden und Dokumente verstanden werden sollen.

Derartige Ausweiskarten sind vielfach in Gebrauch. Ihr Sicherheitsprinzip besteht dabei darin, dass die Karten einerseits sichtbare und unsichtbare Sicherheitsmerkmale tragen, welche ihre Herkunft von einer dazu legitimierten Kartenausgabestelle überprüfbar garantieren und anderseits auch personenbezogene Merkmale, die den jeweiligen Karteninhaber als berechtigten Besitzer ausweisen. Merkmale der ersten Art sind herkömmlicherweise drucktechnische Sicherheitskennzeichen, Guillochen, Wasserzeichen etc., während die individualisierenden Merkmale personenbezogene Daten sind, welche unsichtbar auf einer Magnetbahn und sichtbar als Prägung, Photographie oder Unterschrift auf der Karte vorhanden sind.

Aus der CH- PS 646 536 ist z.B. eine dreischichtige Karte bekannt, deren Mittelschicht lichtundurchlässig ist und im verbundenen Zustand von aussen durch eine lichtdurchlässige Deckschicht hindurch mittels eines Laserstrahls mit individualisierenden Merkmalen beschrieben wird. Damit wird der unberechtigte Zugriff auf die mittlere Schicht schwierig. Das Vorgehen gemäss CH- PS 646 536 hat jedoch den Nachteil, dass sich damit nur relativ schlechte Bildqualitäten erzielen lassen, die als Sicherheitsmerkmal von entsprechend geringerem Wert sind. Da ferner die im übrigen bereits fertige Karte beschrieben wird, sind Manipulationen bei der Beschriftung nicht ausgeschlossen.

Der vorliegenden Erfindung liegt die Aufgabe zugrunde, ein Verfahren zur Herstellung einer mehrschichtigen Karte, sowie eine solche Karte zu schaffen, auf deren Schichten individualisierbare und allgemeine Sicherheitsmerkmale angeordnet sind, die nur schwer nachzuahmen und in einfacher Weise auf mehrere Schichten verteilbar sind, um eine möglichst grosse Sicherheit gegen Datenmissbrauch und Fälschungen bei Herstellung und Reproduktion zu gewährleisten.

Diese Ziele werden bei einem Verfahren der eingangs genannten Art dadurch erreicht, dass karteninhaber- und sicherheitsspezifische Informationen aufgenommen und auf einem Datenträger digital gespeichert werden, dass mindestens ein lichtdurchlässiger Folienabschnitt mit vom Datenträger gelesenen Informationen mittels eines digitalen Druckverfahrens bedruckt wird, dass dieser mindestens eine Folienabschnitt zwischen einer unbedruckten oder einer konventionell oder digital oder nach beiden Verfahren bedruckten lichtdurchlässigen Deckfolie und einer unbedruckten oder einer konventionell oder digital oder nach beiden Verfahren bedruckten Basisfolie angeordnet und mit diesen Folien untrennbar verbunden wird, worauf die Ausweiskarte im gewünschten Format aus dem Verbund ausgestanzt oder ausgeschnitten wird.

Damit kann die Bedruckung der einzelnen Schichten voneinander getrennt und nach unterschiedlichen Drucktechniken, d.h. einerseits im konventionellen Sicherheitsdruck und anderseits im digitalen Druck erfolgen. Mit dem digitalen Druck können die erwähnten, personenbezogenen Merkmale als schwer nachzumachende chromatische oder achromatische Grautonbilder erzeugt werden. Erst zum Verbinden werden die einzelnen, getrennt bereits mit Sicherheitsmerkmalen versehenen Schichten zusammengeführt und untrennbar verbunden. Ein weiterer, wesentlicher Vorteil des Verfahrens besteht darin, dass die Vorder- und die Rückseite der Karte unabhängig voneinander mit individualisierenden Merkmalen oder Daten versehen werden können, deren Vergleich als Sicherheitsmerkmal dient.

Das digitale Realbild-Druckverfahren ist vorzugsweise als punkteüberlappungkompensiertes Fehlerdiffusionsverfahren ausgebildet, womit Grautonbilder sehr guter Qualität, z.B. photoähnliche Bilder des Karteninhabers erzeugbar sind, die fälschungssicher sind. Die beim Fehlerdiffusionsverfahren angewandte Kompensationsbewertung ist mit Vorteil an den jeweiligen Druckvorgang, den Drucker und die Druckunterlage angepasst, was ein zusätzliches Sicherheitselement darstellt.

Bei einer bevorzugten Ausführungsart sind ferner mehrere lichtdurchlässige Folien vorgesehen, welche mittels digitalen Druckverfahren, wie Tintenstrahldruckverfahren oder einem digitalen elektrographischen Verfahren, wie z.B. digitaler Laserdruck Elektroerosion, bedruckt werden.

Ferner kann als weiteres, von aussen nicht wahrnehmbares, personenbezogenes Sicherheitsmerkmal in einer Ebene der Karte eine transparente, charakteristische, optisch abtastbare Innenstruktur ausgebildet sein. Dazu können z.B. Lichtleiter oder andere optische Elemente in eine oder zwischen die einzelnen Schichten eingebettet werden, derart, dass durch die Seitenkanten der Karte ein optischer Kontakt zum Einstrahlen von Licht und zum Auslesen des durch die Innenstruktur charakteristisch veränderten Lichtes hergestellt werden kann. Die optische Innenstruktur stellt eine codierte Information der Karte dar, die durch entsprechende Lichtkontakte abgefragt werden kann.

Im folgenden sollen Ausführungsbeispiele anhand der Zeichnungen näher erläutert werden. Dabei zeigt:

Fig. 1 eine schematische Darstellung der Schichten der Ausweiskarte vor dem Verbinden derselben;

Fig. 2. schematisch eine Aufsicht auf eine laminierte Karte;

Fig. 3 bis 6 verschiedene Varianten zur Anordnung von Lichtleitern zwischen Schichten der Karte;

Fig. 7 schematisch eine Lesevorrichtung für eine Karte mit eingelegten Lichtleitern;

Fig. 8 eine weitere Variante einer Lesevorrichtung mit schlaufenartig angeordneten Lichtleitern;

Fig. 9 eine detailliertere Darstellung dieser Lesevorrichtung;

Fig. 10 eine weitere Lesevorrichtung mit Festanschlag und einer Karte mit integrierten optischen Strukturdaten.

Fig. 11 die Darstellung einer bevorzugten Art der Chipeinbettung in eine Schicht der Karte, und

Fig. 12 eine schematische Darstellung eines weiteren bevorzugten Kartenaufbaus.

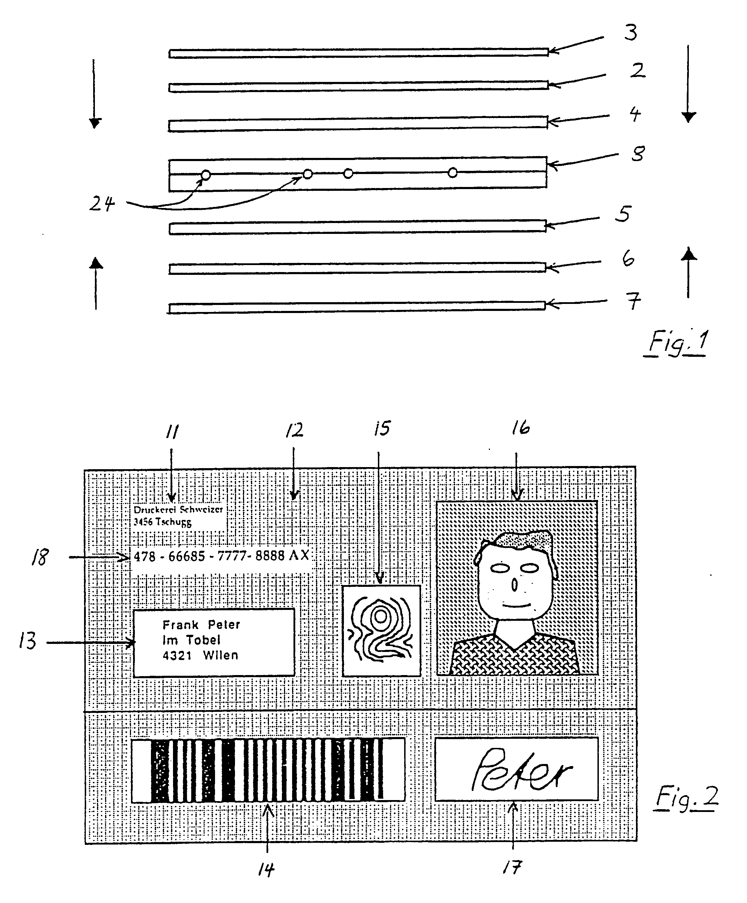

Fig. 1 zeigt schematisch Schichten bzw. Folien einer ersten Ausführung der Ausweiskarte, wobei die einzelnen Folienabschnitte bereits im Kartenformat gezeigt sind, während bei der realen Kartenherstellung zunächst Folienabschnitte vorliegen, welche grösser als das Format einer Karte sind.

Mit 8 ist eine Basisfolie bezeichnet, welche vor allem die Aufgabe hat, der Karte genügende mechanische Festigkeit zu verleihen. Die Dicke der Basisfolie 8 kann nach dem Anwendungsgebiet der Karte ausgewählt werden, wobei natürlich auch die Anzahl der weiteren Folien berücksichtigt werden muss, damit die Gesamtdicke der Ausweiskarte innerhalb der anwendungsspezifischen Grenzen bleibt. Die Basisfolie 8 ist aus Kunststoff und kann zweiteilig mit darin eingebetteter, optischer Innenstruktur, wie z.B. Lichtleitern 24 oder auch einteilig sein.

Mit 2 ist eine vorderseitige Deckfolie bezeichnet, welche ebenfalls aus Kunststoff besteht und mit einer UV-Filterfolie 3 oder Schicht versehen sein kann, oder UV-absorbierende Stoffe beinhaltet. Zwischen der Basisfolie 8 und der vorderseitigen Deckfolie 2 ist mindestens eine lichtdurchlässige Folie 4 vorgesehen.

Diese ist mit einem Digitaldruck versehen, wie noch näher erläutert wird. Weitere, nicht dargestellte lichtdurchlässige Folien können anschliessend an diese Folie 4 vorgesehen sein.

Erfindungsgemäss wird die lichtdurchlässige Folie 4 und allenfalls weitere solche Folien, mittels einem digitalen Druckverfahren mit karteninhaber- und sicherheits-spezifischen Daten bedruckt. Unter einem digitalen Druckverfahren soll dabei ein Druckverfahren verstanden werden, bei welchem Bilder und Buchstaben aus einzeln gedruckten Punkten aufgebaut werden. Vorzugsweise wird dazu ein Tintenstrahldrucker an sich bekannter Bauart verwendet. Um das Aufbringen der Drucktinte auf die Folien zu erleichtern, bestehen diese vorzugsweise aus einer speziellen Kunststoff-Folie, welche mit einer porösen Beschichtung zur Aufnahme der Drucktinte versehen ist. Die schwammartig strukturierte Oberfläche dieser Folie saugt die Drucktinte auf Grund des Kapillareffekts in die poröse Beschichtung ein, womit ein Verfliessen oder Verwischen der relativ langsam trocknenden Drucktinte beim Druckvorgang oder bei der Weiterverarbeitung vermieden wird. Die Herstellung solcher porösen bzw. offenzelligen Oberflächenstrukturen ist in der Kunststofftechnik bekannt (vgl. Kunststofftaschenbuch, 16. Auflage, München 1965, S. 320 ff). Wird ein Tintenstrahldrucker verwendet, welcher nach dem Tintenheissschmelzverfahren arbeitet, so kann auch eine normale, unbeschichtete Kunststoff-Folie verwendet werden. Die bisher beschriebenen Folien 2,4 und 8 können ferner auch mit einem herkömmlichen Druckverfahren, wie Siebdruck, Offsetdruck usw. bedruckt werden, z. B. um Texte, Signaturen, Schraffuren, Guillochen, Ornamente usw. aufzudrucken. Vorzugsweise wird das herkömmliche Druckverfahren dazu verwendet, die für alle Karten gleichbleibenden Muster zu drucken, während die karteninhaberspezifischen Informationen mittels des digitalen Druckverfahrens hergestellt werden.

Das digitale Druckverfahren für Realbilder wird als Punkteüberlappung-kompensiertes Fehlerdiffusionsverfahren ausgeführt. Ein solches ist allgemein bekannt aus einem Artikel von P. Stucki, in Advances in Digital Image Processing for Document Reproduction, Lecture Notes in Computer Science, No. 163, pp 256-302, "VLSI Engineering Beyond Software Engineering", Springer Verlag 1984.

Wie in diesem Artikel ausführlich erläutert wird, beeinflusst die sog. Punkteüberlappung die Qualität eines digitalen, d.h. aus einzeln gedruckten Punkten aufgebauten Bildes. Es handelt sich dabei um den Effekt, dass sich benachbarte, im wesentlichen kreisförmige Punkte eines digitalen Bildes teilweise überlappen müssen, falls vollständige Farbbedeckung erreicht werden soll. Diese Ueberlappung verfälscht indessen das Bild, weil dort jeder benachbarte Punkt nicht mehr seinen vollen Farbdichtebeitrag zum Bild liefert. Um die sich ergebende Unlinearität der Farbbedeckung des Bildes zu korrigieren, wird die Punkteüberlappung beim digitalen Druck rechnerisch berücksichtigt und korrigiert. Damit kann im Zusammenhang mit der vorliegenden Erfindung eine digitale, personenbezogenen Bedruckung erzielt werden, welche dank der hohen Bildqualität schwer zu fälschen ist. Zum Beispiel kann das Bild des Karteninhabers auf eine der Folien so aufgedruckt werden, dass es die Qualität einer Photographie erreicht, ohne jedoch deren sicherheitstechnische Nachteile zu besitzen (vgl. dazu Fig. 2)

Ein zusätzlicher Sicherheitseffekt ergibt sich daraus, dass die Kompensation der Punkteüberlappung von der jeweils beim Druck erzeugten Punktgrösse und Punktform abhängt und diese wiederum vom verwendeten Drucker und der Art des bedruckten Substrats. Die entsprechenden Kompensationskoeffizienten stehen also im Zusammenhang mit dem verwendeten Drucker und der verwendeten Folie. Im Druckersteuergerät werden die passenden Koeffizienten deshalb in einem wegnehmbaren und austauschbaren ROM-Speicher gespeichert. Dieser ROM-Speicher dient als zusätzliches Sicherheitselement, indem ohne den passenden ROM-Speicher wegen falscher Kompensation der Punkteüberlappung keine ausreichende digitale Druckqualität erzielbar ist.

Rückseitig besitzt die in Fig. 1 gezeigte Karte ebenfalls mindestens eine lichtdurchlässige, digital bedruckte Folie 5, an welche nach aussen eine rückseitige Deckfolie 6 mit UV-Filter 7 anschliessen. Dieser Aufbau erlaubt es, die Karte vorder- und rückseitig unabhängig digital zu bedrucken, wobei als Sicherheitsmerkmal Korrelationen zwischen den individuellen Informationen auf Vorder- und Rückseite hergestellt werden können. Die erwähnten UV-Filter 3,7 werden vorgesehen, um nicht lichtechte Drucktinte, z.B. aus dem Tintenstrahldrucker, zu schützen. Es kann dafür eine entsprechend beschichtete Folie oder eine Folie, die UV-absorbierende Stoffe beinhaltet eingesetzt werden.

Die Karte kann weiter auf ihrer Rückseite mit einer Magnetspur versehen werden.

Es wurde bereits erwähnt, dass die Basisfolie 8 ihrerseits als Verbund hergestellt und mit einer transparenten, für die Karte charakteristischen, optisch abtastbaren Innenstruktur versehen sein kann. Eine solche Innenstruktur kann insbesondere durch mehrere eingebettete Lichtleiter erzeugt werden. Diese Lichtleiter 24 sind derart angeordnet, dass ihre Stirnflächen randbündig zur Folie 8 liegen, wie nachfolgend noch im Detail erläutert wird.

Fig. 2 zeigt diese Ausweiskarte schematisch in Aufsicht. Die senkrecht zur Kartenebene lichtundurchlässige Basisfolie 8 ist dabei beispielsweise mit dem Text 11 und der Textur 12 konventionell bedruckt, welche für alle Karten identisch sind. Auf der lichtdurchlässige Folie 4 sind z.B. mittels eines Tintenstrahldruckers die Adresse 13 des Karteninhabers, ein Strichcode 14 und der Fingerabdruck 15 des Karteninhabers aufgedruckt. Es kann ferner, ebenfalls digital, das Bild 16 und die Unterschrift 17 des Karteninhabers aufgedruckt sein, sowie eine Kartennummer 18. Von der Kartenrückseite her kann z.B. eine digitale Bedruckung der rückseitigen, lichtdurchlässigen Folie 5 sichtbar sein. Insbesondere kann rückseitig auch ein Feld für die Handsignatur des Karteninhabers angeordnet sein, so dass diese mit der vorderseitig aufgedruckten Unterschrift vergleichbar ist.

Die digital gedruckten Personeninformationen 13,15,16,17 werden bei der Datenerfassung mit Hilfe einer Tastatur, eines Scanners, einer Videokamera oder eines anderen Sensors digital erfasst und digital gespeichert. Bei der Kartenherstellung können die Datenverarbeitung und der Druckvorgang für die Folien 4,5 und 8 völlig getrennt werden. Dies erfolgt vorzugsweise so, dass die für eine Folie vorgesehene Information alleine keinen Missbrauch ermöglicht. Die verschiedenen Schichten werden dann erst zum Verbinden zusammengeführt und gemeinsam weiterverarbeitet.

Das Verbinden der Folien und die weitere Konfektionierung, wie Ausstanzen, Ausschneiden, Schleifen der Kanten usw., erfolgt auf bekannte Weise, z.B. durch Laminieren. Es kann aber auch eine Haftung mittels Harz oder Lack erzielt werden.

Während die bisher erwähnten digitalen und konventionellen Bedruckungen im wesentlichen sichtbare Sicherheitsmerkmale darstellen, erlaubt die erfindungsgemässe Karte, zusätzlich unsichtbare, personenbezogene Identifikationsmerkmale in die Karte zu integrieren. Wie bereits erwähnt, können dazu Lichtleiter 24 oder andere optisch abtastbare Strukturen in eine Schicht 8 der Karte eingebaut werden. Durch die an den Kartenrändern gebildeten Stirnflächen kann zum Abtasten der optischen Information die Ein- und Auskoppelung von Licht mittels entsprechenden Lesegeräten erfolgen. Damit lässt sich die optische Information, welche in der Karte integriert und visuell nicht wahrnehmbar ist, maschinell lesen.

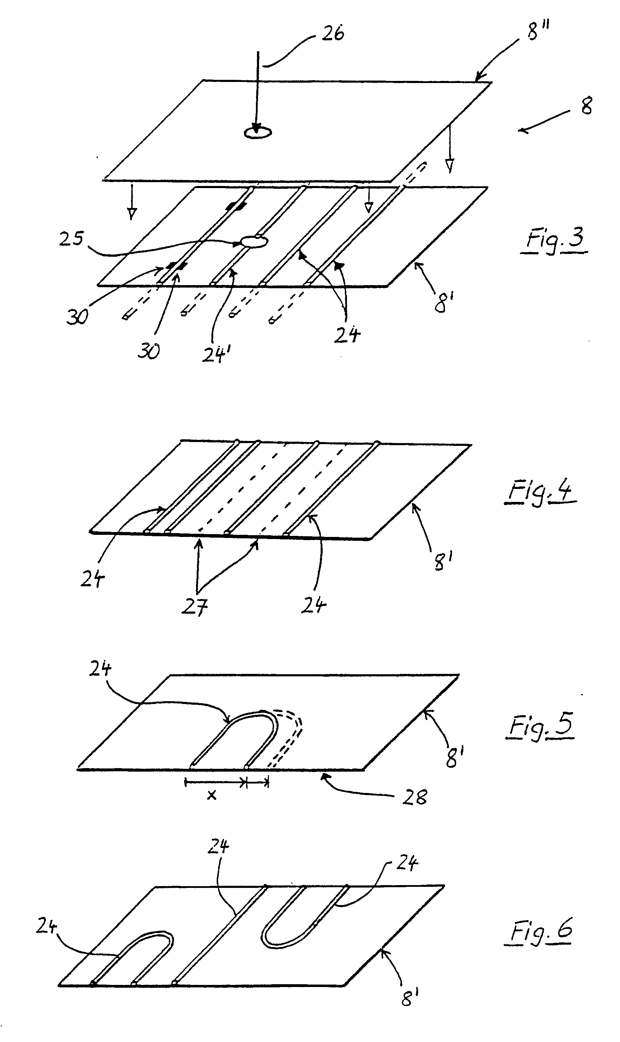

In den Figuren 3 bis 6 sind im Sinne von Beispielen verschiedene Lichtleiteranordnungen als optische Informationsträger gezeigt. Fig. 3 zeigt zusätzlich, wie die entsprechende Schicht 8 der Karte hergestellt wird.

Zunächst ist in den Figuren 3 und 4 eine lineare Anordnung der Lichtleiter 24 zu entnehmen. Bei der Anordnung nach Fig. 3 wird die personenbezogene Codierung bei der Herstellung mittels Durchtrennung einzelner Lichtleiter 24, durch mechanisches Schneiden oder Zertrümmern mittels Laserstrahl hergestellt, wie mit Pfeil 26 angedeutet ist. Das dabei in der Schicht 8 entstehende Loch 25 wird bei der Laminierung durch die restlichen Folien wieder gedeckt, womit das Ganze von aussen visuell nicht wahrnehmbar ist. Gemäss Fig. 4 wird die Kodierung durch selektive Anordnung der Lichtleiter 24 erzielt. An bestimmten, rasterartig angeordneten Stellen 27 fehlt der Lichtleiter 24, bzw. der Lichtkontakt, was vom Lesegerät festgestellt wird.

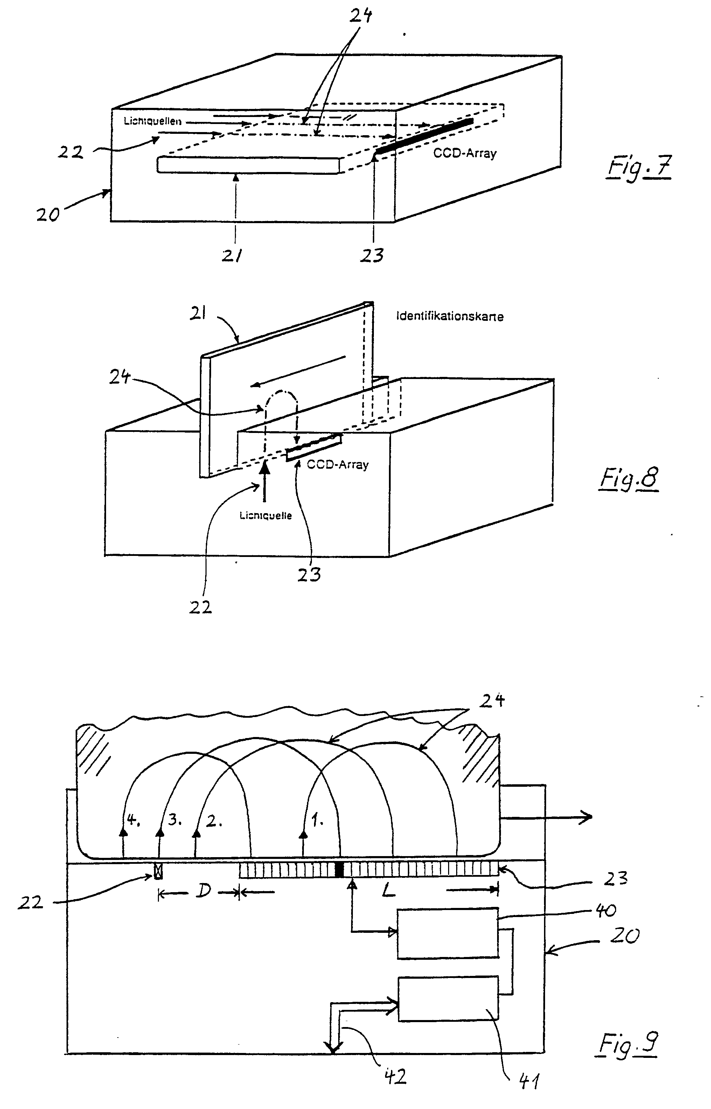

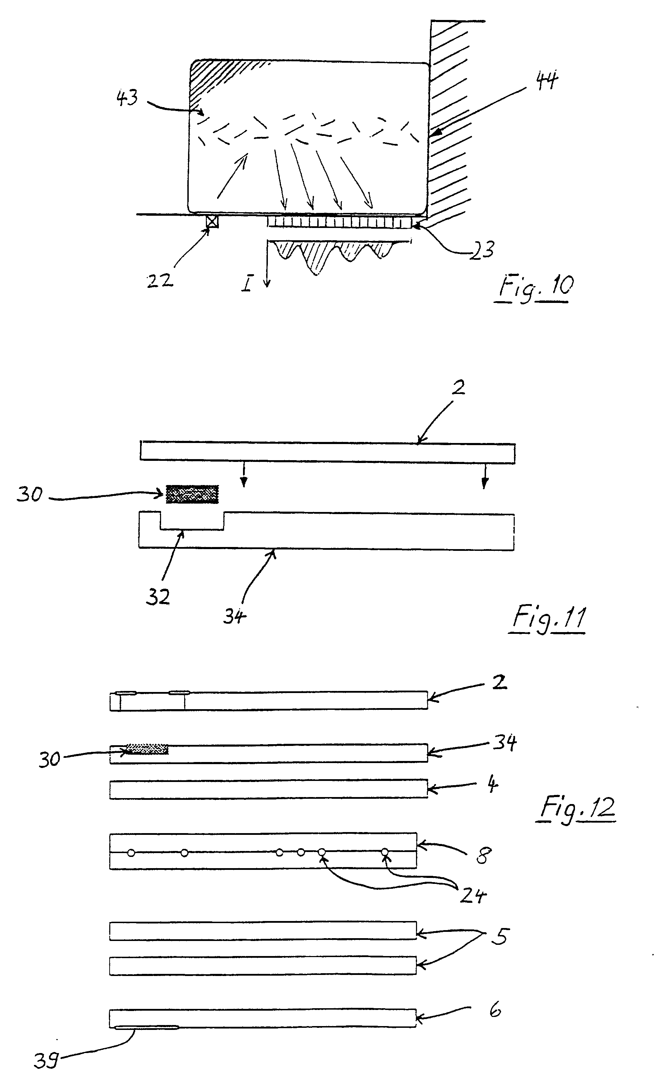

Fig. 5 zeigt eine Ausführung, welche mit einem Lesegerät, das in Fig. 8 und 9 noch näher erläutert wird, zusammenwirkt. Ein oder mehrere Lichtleiter 24 sind dabei schlaufenförmig verlegt, so dass die Einspeisung und die Detektion des Lichts an nur einer Kante 28 der Karte erfolgt. Die Kodierung erfolgt durch die Wahl des Abstandes zwischen den beiden Endes des Lichtleiters an der Kante 28.

Schliesslich ist in Fig. 6 eine Kombination beider Varianten dargestellt.

Als Lichtleiter eignen sich lichtleitende Glasfasern einer Dicke von z.B. 0.23 mm oder 0.46 mm. Da sie beim Laminieren der Kartenfolien teilweise in diese eingedrückt werden, bleibt die fertige Karte an ihren Oberflächen vollkommen plan. Auch visuell können die eingelagerten Fasern insbesondere in der Aufsicht auf die Karte nicht festgestellt werden.

Die Lichtleiter 24 werden zur Herstellung der Schicht 8, welche selbst als Verbund aus zwei Folien 8', 8" aufgebaut ist, auf einer der Folien 8' in der beschriebenen Weise angeordnet. Dies kann z.B. mittels einer gesteuerten Positioniereinrichtung erfolgen, welche die Lichtleiter ab Rolle ausgibt, positioniert und mittels lokalem Anschmelzen der Folie 8' oder Leimpunkten (vgl. Stellen 30 in Fig. 3) fixiert. Anschliessend werden Folien 8', 8" vereinigt.

Die Positionierung der Lichtleiter kann dabei innerhalb noch zu erläuternder Bedingungen durchaus stochastisch erfolgen, solange die erzielten Strukturen eine individuelle Zuordnung der entsprechenden (zufälligen) Information und damit der Karte zu einem bestimmten Inhaber erlaubt. Die Positioniereinrichtung kann in diesem Fall durch einen Zufallsgenerator gesteuert sein. Auch ein absolut zufälliges Anordnen von Lichtleitern 24 ist möglich, sofern die Lesegeräte entsprechend ausgestaltet sind. Die Lichtleiteranordnung stellt in diesem Fall eine Art regelloser "Fingerabdruck" der Karte dar, der mittels Lesegerät überprüfbar ist.

In den Fig. 7,8 und 9 ist schematisch dargestellt, wie die in der Schicht 8 als zusätzliches Sicherheitsmerkmal eingelegten Lichtleiter optisch ausgewertet werden können. In einem nur schematisch dargestellten Lesegerät· 20 gemäss Fig. 7 wird die eine Kante der Karte 21, an welcher die Lichtleiter 24 münden, von einer Lichtquelle 22 beleuchtet. Lichtempfindliche Elemente 23 des Lesegerätes prüfen dann an der gegenüberliegenden Kante der Karte, an welcher die anderen Enden der Lichtleiter münden, ob und an welchen Stellen das Licht richtig durch die Karte geleitet wird, d.h. ein Lichtkontakt vorliegt. Natürlich sind auch Konfigurationen möglich, bei welchen die Lichtquelle 22 auf derselben Kartenseite angeordnet werden können, wenn der oder die Lichtleiter entsprechend verlegt worden sind.

Ein entsprechendes Lesegerät ergibt sich insbesondere aus der Fig. 8 und 9. Die Lichtleiter 24 sind dabei schlaufenförmig verlegt, so dass jeweils beide Enden eines Lichtleiters an derselben Kante optisch gespiesen und abgetastet werden können.

Aus Fig. 9 lässt sich insbesondere ersehen, welche Anzahl von Variationsmöglichkeiten der inneren Strukturdaten sich erzielen lässt. Es ist schematisch eine Karte mit einer Anzahl M (im Beispiel 4) schlaufenförmig angeordneten Lichtleitern 24 dargestellt. Das Lesegerät 20 besitzt eine Anzahl N (im Beispiel 32) lichtempfindliche Elemente 23, z.B. einen linear angeordneten CCD-Array, welcher sich über eine Länge L erstreckt. Am Lesegerät 20 ist ferner eine Lichtquelle 22 im Abstand D vom ersten der lichtempfindlichen Elemente 23 angeordnet.

Die Lichtleiter 24 in der Karte können nun an sich beliebig angeordnet sein mit der einzigen Bedingung, dass die beiden Enden jedes Lichtleiters nicht näher als der Abstand D und nicht weiter als der Abstand L+D voneinander an der Seitenkante der Karte münden.

Wird nun die Karte maschinell oder von Hand in Pfeilrichtung am Lesegerät 20 vorbei gezogen, so stellt jeder Lichtleiter der Reihe nach einmal einen Lichtkontakt zwischen der Lichtquelle 22 und einem der lichtempfindlichen Elemente 23 her. Jeder der M-Lichtleiter 24 regt damit beim Lesevorgang jeweils ein bestimmtes der N CCD-Elemente an. Es ergeben sich auf die Weise im wesentlichen $N^M$ unterschiedliche Signalfolgen, von denen jede einzelne für eine bestimmte Karte charakteristisch ist. Wird zum Beispiel M = 4 und N = 32 gewählt, so ergeben sich im wesentlichen $32^4$ = 1'048'576 unterschiedliche Signalfolgen.

Wird in den Lesegeräten der Abstand D unterschiedlich gewählt, so ergeben sich für verschiedene Abstände D unterschiedliche Signalfolgen für eine bestimmte Karte, so dass sich die Variationsmöglichkeiten noch erhöhen. Damit kann insbesondere eine selektive Zutrittsberechtigung über bestimmte Lesegeräte erzielt werden, indem für gewisse Karten bzw. die entsprechenden Signalfolgen die Zutrittsberechtigung ausgeschlossen wird.

Die Aufnahme der Signalfolgen erfolgt mittels einem Scanner 40, der die CCD-Elemente 23 hochfrequentig abtastet. Die aufgenommenen Signale werden einer Signalaufbereitungsschaltung 41 zugeleitet, welche daraus der jeweiligen Karte zugeordnete innere Strukturdaten ableitet und diese über einen Datenbus 42 einem Rechner (nicht gezeigt) zur Verfügung stellt. Diese inneren Strukturdaten der Karte sind vorzugsweise verkoppelt mit anderen Daten, die auf der Karte mittels Magnetstreifen 39 (vgl. Fig. 12) oder auf andere Weise gespeichert sind. Diese Verkoppelung kann im Rechner überprüft werden. Wird festgestellt, dass die Verkoppelung nicht korrekt vorliegt, so deutet dies auf eine Manipulation an der Karte hin.

Im eben beschriebenen Beispiel wird jeweils nur der Abstand zwischen den Enden der Lichtleiter 24 ausgewertet, nicht jedoch ihre absolute Lage in der Karte. Es kann damit als relatives Verfahren bezeichnet werden, das den Vorteil hat, dass die Toleranzen der Kartenanordnung keinen negativen Einfluss haben. Das Lesegerät und die Karte können indessen auch so aus gebildet sein, dass die absolute Lage der inneren optischen Struktur aufgenommen und ausgewertet wird. Dies ist der Fall bei einem Lesegerät mit Anschlag, wie es in Fig. 10 schematisch gezeigt ist.

In diesem Beispiel sind anstelle der Lichtleiter, welche entsprechend der vorstehenden Beschreibung angeordnet sein könnten, andere optische Elemente 43 in eine für Licht transparente Schicht der Karte integriert. Dies können z.B. reflektierende Teilchen sein, welche regellos in dieser Kartenschicht angeordnet sind und eine selektiv reflektierende Zone bilden. Mittels einer Lichtquelle 22 wird Licht in die transparente Schicht der Karte eingestrahlt, welche an einem Anschlag 44 des Lesegerätes anliegt. Das zur Kante der Karte reflektierte Licht wird mittels einem CCD-Array 23 als Intesitätsverteilung I aufgenommen. Diese Intensitätsverteilung bildet gewissermassen einen für jede Karte charakteristischen "Fingerabdruck". In der bereits erwähnten Signalaufbereitungsschaltung 41 wird daraus ein Strukturdatensignal abgeleitet, das mit anderen kartenspezifischen Daten verkoppelbar ist und auf diese Weise als Sicherheitsmerkmal genützt werden kann.

Obwohl die Anordnung der Schicht mit integrierten optischen Strukturdaten, insbesondere mit Lichtleitern hier jeweils im Zusammenhang mit einem bestimmten Kartenaufbau mit digitaler Bedrukkung beschrieben und vorteilhaft einsetzbar ist, wird ausdrücklich darauf hingewiesen, dass Lichtleiter dieser Art auch in andere Kartentypen, insbesondere in herkömmliche Plastikkarten, integrierbar sind. Es wird hierfür ausdrücklich die Einreichung einer Teilanmeldung vorbehalten.

Im Zusammenhang mit der vorliegend beschriebenen Erfindung hat die Anordnung von Lichtleitern indessen den Vorteil, dass nebst den personenbezogenen, sichtbaren Merkmalen, die über mehrere Schichten verteilt sind, zusätzlich noch (personenbe zogene oder andere) unsichtbare, fest eingebaute Merkmale in einer separaten Schicht hinzugefügt werden. Die darin enthaltene, fest eingebaute Information kann mit anderen, auf der Karte enthaltenen Information verknüpft werden, was die Fälschungssicherheit stark erhöht.

Anhand der Figuren 11 und 12 wird ein weiteres Ausführungsbeispiel der Erfindung beschrieben, bei welchem eine als Chip 30 ausgebildete, elektronische Schaltung in die Karte integriert ist. Die den Chip tragende, durchsichtige Folie 34 ist mit einer, der Chip-Grösse entsprechenden Prägung 32 versehen, in welche der Chip eingebettet ist. Eine Deckfolie 2 kann dann mit der Chiptragenden Folie 34 verbunden werden. Im Vergleich zum bisherigen, blossen Einkleben des Chips zwischen zwei Folien ist der Chip 30 gegen Eingriffe besser geschützt und es kann eine ebene Karte erzielt werden. Insbesondere kann die chiptragende Folie 34 ebenfalls zum Schluss mit der anderen Schicht verbunden werden.

In Fig. 12 ist ein schematischer Kartenaufbau einer solchen Chip-Karte dargestellt. Von oben nach unten sind folgende Folien bzw. Schichten vorgesehen. Die Deckfolie 2 trägt Anschlüsse für den Chip 30 und kann mit einer UV-Filterfolie oder Schicht versehen sein. Daran schliesst die den Chip tragende, durchsichtige (transparente) Folie 34 sowie eine oder zwei mittels Digitaldruck individualisierte, durchsichtige Folien 4 an. In eine Basisfolie 8 sind in der beschriebenen Weise Lichtleiter 24 als personenbezogenes Sicherheitsmerkmal eingelegt. Darauf folgen wiederum eine oder zwei mittels Digitaldruck mit Rückseiteninformation individualisierte Folien 5 sowie eine rückseitige Deckfolie 6 als Schutzschicht mit oder ohne UV Filter, auf die ein Magnetstreifen 39 geklebt ist. Wie beim zuerst erläuterten Ausführungsbeispiel werden auch hier die Folien einzeln in der beschriebenen Weise mit personenbezogenen Sicherheitsmerkmalen versehen, die damit auf mehrere Schichten verteilt sind, und anschliessend verbunden.

Die erfindungsgemäss hergestellte Karte besitzt gegenüber bekannten Karten eine wesentlich erhöhte Fälschungs- und Verfälschungssicherheit. Wegen den auf mehreren, unabhängig voneinander hergestellten Folien angeordneten, jedoch aufeinander bezogen, individualisierenden Merkmalen. Ferner können dabei verschiedene Techniken, wie konventioneller Sicherheitsdruck, digitaler Druck, Anordnung von Lichtleitern, kombiniert werden, was eine Fälschung undenkbar erscheinen lässt, da innerhalb der Produktionsorganisation der Karte getrennte Wege beschritten werden können, die erst am Schluss zusammengeführt werden.

**Ansprüche**

1. Verfahren zur Herstellung einer mehrschichtigen Ausweiskarte, dadurch gekennzeichnet, dass karteninhaber- und sicherheitsspezifische Informationen aufgenommen und auf einem Datenträger digital gespeichert werden, dass mindestens ein lichtdurchlässiger Folienabschnitt mit vom Datenträger gelesenen Informationen mittels eines digitalen Druckverfahrens bedruckt wird, dass dieser mindestens eine Folienabschnitt zwischen einer unbedruckten oder mit sicherheitstechnischen und/oder anderen Informationen konventionell oder digital oder nach beiden Verfahren bedruckten lichtdurchlässigen Deckfolie und einer unbedruckten oder einer konventionell oder digital oder nach beiden Verfahren bedruckten Basisfolie angeordnet und mit diesen Folien untrennbar verbunden wird, worauf die Ausweiskarte im gewünschten Format aus dem Verbund ausgestanzt oder ausgeschnitten wird.

2. Verfahren nach Anspruch 1, dadurch gekennzeichnet, dass das digitale Realbild-Druckverfahren als Punkteüberlappung-kompensiertes Fehlerdiffusionsverfahren ausgestaltet ist.

3. Verfahren nach Anspruch 2, dadurch gekennzeichnet, dass die Kompensationsbewertung des digitalen Druckverfahrens in Abhängigkeit des jeweils eingesetzten Druckers bzw. des jeweils angewendeten direkten Druckverfahrens gesteuert wird.

4. Verfahren nach einem der vorangehenden Ansprüche, dadurch gekennzeichnet, dass das digitale Druckverfahren wahlweise chromatisch oder achromatisch ausgeführt wird.

5. Verfahren nach Anspruch 1, dadurch gekennzeichnet, dass aussenseitig der mindestens einen lichtdurchlässigen Folie ein UV-Filter angeordnet wird.

6. Verfahren nach einem der vorangehenden Ansprüche, dadurch gekennzeichnet, dass zwischen der mindestens einen lichtdurchlässigen Folie und der Basisfolie eine weitere lichtdurchlässige Folie angeordnet wird.

7. Verfahren nach einem der vorangehenden Ansprüche, dadurch gekennzeichnet, dass als digitales Druckverfahren ein Tintenstrahldruckverfahren verwendet wird.

8. Verfahren nach Anspruch 7, dadurch gekennzeichnet, dass ein Tintenheissschmelzverfahren verwendet wird.

9. Verfahren nach einem der Ansprüche 1 bis 6, dadurch gekennzeichnet, dass als Druckverfahren ein elektrographisches Verfahren eingesetzt wird.

10. Verfahren nach einem der vorangehenden Ansprüche, dadurch gekennzeichnet, dass die Karte in der Kartenebene lichttransparente Bereiche aufweist, welche optisch abtastbare Strukturen bilden, wobei die Seitenkanten der Karte zur Herstellung eines Lichtkontaktes zur Ermittlung der kartenspezifischen optischen Strukturdaten zugänglich sind.

11. Verfahren nach Anspruch 10, dadurch gekennzeichnet, dass mindestens ein Lichtleiter als optisch abtastbare Struktur vorgesehen ist.

12. Verfahren nach einem der Ansprüche 10 oder 11, dadurch gekennzeichnet, dass die Anordnung des oder der Lichtleiter derart erfolgt, dass damit eine Information dargestellt wird, die verkoppelt ist mit einer anderen, auf der Karte gespeicherten, kartenspezifischen Information.

13. Vorrichtung zur Durchführung des Verfahrens nach einem der vorangehenden Ansprüche, dadurch gekennzeichnet, dass für das digitale Druckverfahren ein digitaler Drucker mit einem Drucker-Steuergerät zur Steuerung der Punkteüberlappungskompensation vorgesehen ist, wobei im Drucker-Steuergerät ein auswechselbarer Festwertspeicher für die Kompensationsbewertungsgrössen angeordnet ist.

14. Ausweiskarte, hergestellt nach dem Verfahren gemäss einem der Ansprüche 1 bis 12.

15. Ausweiskarte, dadurch gekennzeichnet, dass mindestens eine Folie in die Karte eingebettet ist, welche in der Kartenebene transparente Bereiche aufweist, die optisch abtastbare Strukturen bilden, aus welchen mittels optischer Abtastung kartenspezifische, optische Strukturdaten auslesbar sind.

16. Ausweiskarte nach Anspruch 15, dadurch gekennzeichnet, dass mehrere Lichtleiter in die Karte eingebettet sind, die wahlweise zur Unterbrechung des Lichtdurchgangs durchtrennbar sind, um jede Karte zu individualisieren.

17. Ausweiskarte nach Anspruch 15, dadurch gekennzeichnet, dass Lichtleiter derart angeordnet sind, dass die an den Stirnflächen der Karte herstellbaren Lichtkontakte eine die Karte individualisierende Information darstellen.

18. Ausweiskarte nach Anspruch 17, dadurch gekennzeichnet, dass der bzw. die Lichtleiter derart angeordnet sind, dass die damit dargestellte Information mit mindestens einer anderen auf der Karte vorhandenen Information in überprüfbarem Zusammenhang steht.

19. Ausweiskarte nach einem der vorangehenden Ansprüche, dadurch gekennzeichnet, dass mindestens eine Folie zur Aufnahme einer Chip-förmigen, elektrischen Schaltung vorgesehen ist, wobei diese Folie eine Prägung zur Einbettung der chipförmigen Schaltung an einer Folienfläche aufweist.

_Fig. 1_

Druckerei Schweizer
3456 Tschugg

478 - 66685 - 7777 - 8888 AX

Frank Peter
Im Tobel
4321 Wilen

_Peter_

_Fig. 2_

_Fig.3_

_Fig.4_

_Fig.5_

_Fig.6_

Fig.7

Fig.8

Fig.9

Fig. 10

Fig.11

Fig.12